# EUROPEAN PATENT SPECIFICATION

(11) **EP 3 107 403 B1**
(45) Date of publication and mention of the grant of the patent: **26.08.2020**
(21) Application number: 14710509.2
(22) Date of filing: 20.02.2014
(51) Int. Cl.: A23G 1/22, A23G 7/02, A23G 1/26, A23G 1/20, A23G 1/00, A23G 7/00

(54) **SYSTEM FOR PRODUCING CHOCOLATE-BASED ARTICLES IN SOLIDIFYING FORM**
SYSTEM ZUR HERSTELLUNG VON ARTIKELN AUF SCHOKOLADENBASIS IN VERFESTIGTER FORM
SYSTÈME DE PRODUCTION D'ARTICLES À BASE DE CHOCOLAT SOUS FORME SOLIDIFIÉE

(43) Date of publication of application: 28.12.2016
(73) Proprietor: IPCO Process systems B.V., 4824 AH Breda (NL)
(72) Inventor: LAURIJSSEN, F.W.A., NL-5111 CE Baarle-Nassau (NL)
(74) Representative: Patentanwälte Ruff, Wilhelm, Beier, Dauster & Partner mbB
(86) International application number: PCT/EP2014/053359
(87) International publication number: WO 2015/124193

(56) References cited:
- EP-A2- 0 157 290
- DE-A1- 4 040 429
- DE-A1- 19 514 917
- US-A- 3 472 043
- US-A1- 2008 274 241

## Description

### Technical field

The present invention relates to a system for producing chocolate-based articles in solidifying form and a method of using such system.

### Background art

German patent publication DE 195 14 917 A1 discloses a liquid chocolate or fat air cooling apparatus with a cooling channel coated food casing with a transport belt running through it, having upper and lower cooling channels. A transportation system with a conveyor belt for transporting mould trays through a cooling chamber is provided.

Production of chocolate-based articles in solidifying form, such as chocolate bars, generally requires the execution of a series of processing steps under predetermined conditions to ensure that the final chocolate-based articles have a desired appearance and texture. It is well known in the art that chocolate contains solid particles dispersed throughout a fat matrix, wherein the term "fat" may include both cocoa butter and milk fat. The state of the chocolate fat can change depending on the environment temperature. For example in room temperature chocolate is in a solid state, while when heated above a certain temperature threshold point it can be melted into a molten or liquid state so that it flows as a fluid. The liquid state of the chocolate is reversible and will return back to a solid state when cooled back below the threshold temperature point.

In view of the above, a typical production method for producing chocolate-based articles in solidifying form may start by completely melting the chocolate fat to a liquid state. Once the chocolate fat has been melted the next step may involve the tempering of the chocolate, wherein small stable crystals are formed through the chocolate fat in the liquid state. The chocolate tempering step, although not always necessary, ensures that the chocolate solidifies with a desired shiny and smooth surface. After melting and tempering, the liquid chocolate may then be deposited into mould trays, which are typically cooled in a temperature and humidity-controlled environment, such as a cooling chamber. The cooling process may typically take anywhere between 10 minutes to 40 minutes depending on the type of chocolate-based articles produced. The cooling process may require that the mould trays are transported through a number of cooling zones to prevent sudden changes in temperature and humidity. It is known in the art that such changes may cause the destabilization of the chocolate butter crystals formed during the tempering process and may result in the chocolate-based article having an undesired appearance and texture.

Typically the mould trays are transported through the cooling chamber by means of a conveyor system, which transports the mould trays along the different cooling zones in the cooling chamber before they are collected at an exit point. During transportation of the mould trays along the different cooling zones, the liquid chocolate in the mould trays preferably cools uniformly throughout.

However, the uniform cooling of the liquid chocolate in the mould trays poses some difficulties since it requires that the exposed upper part of the liquid chocolate in the mould trays solidifies at the same rate as the lower part of the liquid chocolate in the mould trays. In the simplest form, a mould tray may comprise at least one cavity for receiving the liquid chocolate mass and a flat bottom side, which flat bottom side during transportation rests on the top load carrying side of the conveyor belt In the case where a flat type conveyor belt is used, the bottom side of the mould tray would not receive sufficient cooling air from the cooling chamber. As a result the bottom part of the liquid chocolate mass would cool at a different rate, for example slower, than the exposed liquid chocolate mass.

To overcome the above-mentioned problem, prior art embodiments use a chain conveyor that employs suspended chains to which the mould trays are hung so that the cooling air can circulate on the bottom side of the mould trays. However, such chain conveyor configuration has the disadvantage that it does not provide a stable flat surface for positioning the mould trays. As a result, during transportation the mould trays may be displaced or subjected to a continuous vibration which may dislocate the liquid chocolate mass in the mould trays and alter the appearance and texture of the final chocolate-based articles leading to a production yield loss. Moreover, it has been found that the suspended chains elongate under their own weight and the weight of the mould trays having an effect on the way the mould trays hang on them, possibly even jamming the chains and hindering the movement of the chains and the mould trays.

### Disclosure of the invention

It is an aim of the present invention to provide a system for producing chocolate-based articles in solidifying form that allows the liquid chocolate mass in the mould tray to cool under conditions with improved control while maintaining smooth transportation of the mould trays through the cooling chamber.

This aim is achieved according to the invention with the system for producing chocolate-based articles in solidifying form showing the technical characteristics of the characterising part of the first claim.

According to a first aspect of the present invention a system for producing chocolate-based articles is provided. The system comprises a transportation system having at least a first conveyor belt. The system of the present invention comprises a loading section positioned at an entry point of the transportation system, which may be provided for loading mould trays filled with chocolate mass in liquid form onto a top load carrying side of the at least first conveyor belt. The at least first conveyor is arranged to transport the mould trays through a cooling chamber along a first cooling path, which cooling chamber is arranged for circulating cooling air for solidifying the liquid chocolate mass under predetermined conditions before the mould trays are collected at a collecting point, which is positioned at an exit point of the transportation system.

It has been found that providing air circulation means between the top load carrying side of the at least first conveyor belt and a bottom side of the mould trays, allows the cooling air to circulate along the bottom side of the mould trays irrespective of the type of the conveyor system employed in the transportation system. The provision of air circulating means has as an advantage that the chain conveyor used in the prior art solutions can be replaced with a conveyor belt having a more stable surface for transporting the mould trays while improving control of the cooling conditions such that, for example, the liquid chocolate mass solidifies more uniformly in the mould trays. As a result, the problems related to the use of a chain conveyor of the prior art can be overcome.

According to embodiments of the current invention, the at least first conveyor belt may be a continuous flat type conveyor belt. The at least first conveyor belt may further comprise a plurality of overlapping sheets of material arranged in such a way so that a continuous substantially flat surface is formed for positioning the mould trays. The at least first conveyor belt may be made of a durable material, for example a polymer or metal-based material such as plastic or aluminium. The different sheets of material can provide the belt with specific properties, for example, an inner sheet may be provided for provided strength whereas a surface sheet may be provided to provide specific surface properties with respect to, for example, the mould tray positioned on top of it.

By providing a conveyor belt with a continuous substantially flat surface, the mould trays can be transported through the cooling chamber in a smooth and controlled manner. As a result, the problems related to the use of the chain conveyors used in the prior art solutions can be eliminated or at least minimised. More in particular, eliminating or minimising the external factors that may cause the dislocation of the liquid chocolate mass in the mould trays may contribute to an increase in the production yield since the number of chocolate-based articles not meeting the production specifications would be significantly reduced.

According to the invention the air circulation means comprises support members spaced apart from one another. According to embodiments of the present invention, the air circulation means comprise support members arranged to support the mould trays on the at least first conveyor belt. The support members may be provided in the form of support legs or fins spaced apart from one another and arranged such that when the mould trays are positioned on the top loading carrying side of the at least first conveyor belt the bottom side of the mould trays is elevated with respect to the top loading carrying side of the conveyor belt. The provision of a space between the support members enables the formation of air passageways, which allow the cooling air to circulate along the bottom side of the mould trays irrespectively of the type of conveyor belt used, thereby ensuring that the liquid chocolate mass solidifies uniformly in the mould trays.

According to embodiments of the current invention, the support members may be part of the mould trays arranged to extend outwardly form the bottom side of the mould trays. The support members may be arranged on the bottom side of the mould trays in a variety of patterns. For example the support legs may be arranged along the periphery of the mould trays, such that a larger portion of the bottom side of the mould trays remains exposed to the cooling air. In another example, the support legs may be arranged in a matrix pattern on the bottom side of the mould trays, which may allow the support of heavier mould trays on the top load carrying side of the at least first conveyor belt by spreading the total weight of the mould tray across a larger number of support members.

According to embodiments of the present invention, the support members may be integrally formed with the mould trays in a single piece made of the same material, for example a polymer or metal -based material such as plastic or aluminium. Alternatively, the support members may be provided separately from the mould trays and arranged to be secured on the bottom side of the mould trays by fixing means, such as glue, screws, a bayonet mount, a snap-fit connection, etc. Furthermore, the support members may be made from a different material than the mould trays, for example the mould trays may be made from a metal-alloy such as aluminium while the support member may be polymer-based. The manufacturing of the support members from a different material from the mould trays may be significantly decrease the cost of manufacturing the mould trays with the air passageways.

According to embodiments of the present invention, the support members may be part of the at least first conveyor belt. For example, the support members may be arranged to extend outwardly from the top load carrying side of the at least conveyor belt. By providing the support members on the belt, conveyor belts used in the prior art, for example in totally different applications, can be modified for use in the current invention by replacing the belt with a suitable continuous belt provided with the support members. By enabling the use of existing conveyor belt systems in the current invention the overall cost and the time required for realising the system of the present invention may be significantly reduced.

According to embodiments of the present invention, the support members may be provided in the form of a separate support body arranged to cooperate with the bottom side of the mould trays. The support body may be in the form of a frame arranged to cooperate with the bottom side of the mould trays such that cooling air can circulate along the bottom side of the mould trays when the mould trays are positioned on the top load carrying side of the at least conveyor belt, preferably with the support body arranged in between the mould tray and the conveyor belt. The use of a support body, separate from the mould trays and the conveyor belt, may have as an advantage that it can be used together with any conveyor belt type, even existing ones, to provide a stable surface for the mould trays, even mould trays which are for example not specifically adapted at being used on a conveyor system but adapted at being used in a stationary position, for example in a fridge, during transportation. Furthermore, in order to increase the stability of the mould trays during transportation, the support body may further be provided with support members, such as support legs or fins, extending outwardly from a support surface of the support body and spaced apart from one another. The support member may be integrally formed with the support body made form the same material. For example, the support body may be made from a polymer or metal-based material such as plastic or aluminium. Alternatively, the support members may be provided as separate elements from the support body and may be arranged to be attached to the support surface of the support body by fixing means, such as glue or screws, a bayonet mount, a snap-fit connection, etc. Furthermore, the support members may be made from a material that is different from that of the support body or has different properties. For example, the support body may be made of hard plastic to provide rigidity and support to the mould trays, while the support members may be made from an elastomeric type of material, such as rubber, to provide vibration dampening.

According to embodiments of the present invention, the system for producing chocolate-based articles may further comprise at least a second conveyor belt. The at least second conveyor belt may be positioned below or above the at least first conveyor belt and arranged for carrying the mould trays through a second cooling path in, preferably through, the cooling chamber. The at least second conveyor belt may be arranged to carry the mould trays along the second cooling path in a transport direction which is opposite to that of the first cooling path. By providing at least a second conveyor belt, the total dimensions, especially along length direction, of the system for producing chocolate-based articles can be significantly reduced since the total transport distance that the mould trays need to travel in the cooling chamber can be split between the at least first and at least second conveyor belts.

The positioning of the at least second conveyor belt at an opposite side with respect to the at least first conveyor belt, above or below, may further allow for the loading section and the collecting section to be positioned at the same side of the system. This may have as an advantage that a single operator, human or robot, may used to operate both the loading and collecting of the mould trays, which would for example reduce the operating cost of such a system.

According to embodiments of the current invention, the system may be designed so that it fits in an intermodal container, for example by using the second conveyor belt for further reducing the dimensions, which would enable for the transportation of the system in a pre-assembled state in another part of the world such that it can be deployed more rapidly for production, for example reducing the need for special engineering support.

According to embodiments of the present invention, the mould trays may be transferred from the at least first conveyor belt to the at least second conveyor belt by means of a lift system. The lift system may be provided in the form of a further conveyor belt arranged to transport mould trays between different levels, for example a vertical reciprocal conveyor belt may be used.

The invention also relates to a method for producing chocolate-based articles in solidifying form using the system according to the first aspect of the present invention is provided. The method comprises the step of loading mould trays filled with chocolate in liquid form onto a top loading load carrying side of at least a first conveyor belt at an entry point of a transportation system. Once the loading step is completed the mould trays are transported by means of the at least first conveyor belt through a cooling chamber along a first cooling path, the cooling chamber being arranged for circulating cooling air for solidifying the chocolate mass under predetermined conditions. Finally, the mould trays are collected at a collection point positioned at an exit point of the transportation system, where the solidifying chocolate-based articles may be removed from the mould trays. The method further comprises the step of providing air circulation means according to the first aspect of the present invention between the top load carrying side of the at least first conveyor belt and a bottom side of the mould trays such that cooling air can circulate along the bottom side of the mould trays. , wherein the air circulation means comprises support members spaced apart from one another.

### Brief description of the drawings

The invention will be further elucidated by means of the following description and the appended figures.
Figure 1 shows a cross-sectional view of a system for producing chocolate-based articles in solidifying form according to an embodiment of the present invention.
Figures 2 to 4 show perspective views of different embodiments of the bottom side of the mould tray having support members arranged in a variety of patterns according to embodiments of the present invention.
Figure 5 shows a cross-sectional view of the system for producing chocolate-based articles in solidifying form according to second embodiments of the present invention.
Figure 6 shows a cross-sectional view of the system for producing chocolate-based articles in solidifying form according to third embodiments of the present invention.
Figure 7 and 8 show examples of the support body according to third embodiment of the present invention and how it can be used together with the mould tray.
Figure 9 and 10 shows cross-sectional views of the system for producing chocolate-based articles in solidifying form according to further embodiments.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The term "chocolate-based articles" refers to chocolate products that are stable at ambient temperatures and may take the form of solid pieces of chlorate, such as chocolate bars, or other products incorporating chocolate as a component, for example for coating other food products, such as nuts, fruits and the like.

The term "chocolate-based articles in solidifying form" refers to melted chocolate which has been cooled to produce a solid chocolate wherein at least a portion, preferably a substantial part, of the fat of the chocolate is in solid state.

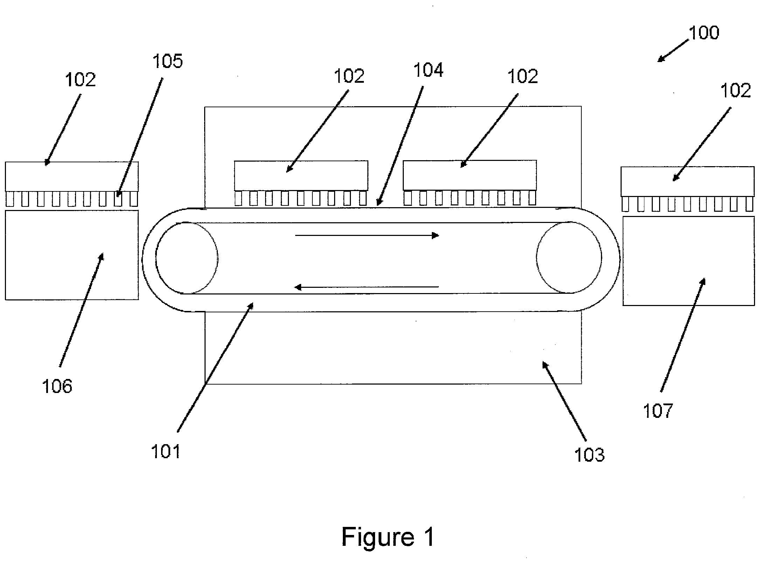

Figure 1 shows a system 100 for producing chocolate-based articles in solidifying form according to an embodiment of the present invention. The system 100 may comprise a loading section 106 for loading mould trays 102 filled with chocolate mass 811 in liquid form onto a top load carrying side 104 of at least a first conveyor belt 101, which at least first conveyor belt 101 is part of a transportation system. The at least first conveyor belt 101 is arranged to transport the mould trays 102 through a cooling chamber 103, which is arranged for circulating cooling air for solidifying the chocolate mass 811 under predetermined conditions before the mould trays 102 are collected at a collecting section 107 positioned at an exit point of the transportation system. As previously discussed, the temperature and humidity of the cooling chamber may play an important role in the appearance and texture of the final chocolate-based article. For this reason, the cooling chamber 103 may comprise a number of cooling zones (not shown) in order to prevent sudden changes of temperature and humidity. According to embodiments of the present invention, the system of figure 1 is provided with air circulation means 105, which are arranged between the top load carrying side 104 of the at least first conveyor belt 101 and a bottom side 108 of the mould trays 102. The air circulation means 105 are provided such that the cooling air provided by the cooling chamber 103 can circulate along the bottom side of mould trays 108 in order to make more sure that the lower part of the chocolate mass 811 in the mould trays solidifies at a same rate, preferably substantially same rate, as the upper part of the chocolate mass 811 which is exposed to the cooling air. Moreover, the provision of air circulation means between the top load carrying side 104 of the at least first conveyor belt 101 and the bottom side 108 of the mould tray ensures that the chocolate mass 811 can be solidify more uniformly irrespective of the type of the conveyor belt used. This may have as an advantage that a conveyor belt having a more stable top load carrying side 104 may be used, such as for example a flat continuous conveyor belt type, which may ensure that the dislocation of the liquid chocolate mass 811 during transportation is eliminated or at least minimised. Therefore, the provision of a stable top load carrying side in combination with the air circulation means105 may contribute to the liquid chocolate mass being uniformly solidified in the mould trays 102 while ensuring the smooth transportation of the mould trays through the cooling chamber.

The cooling chamber 103 is for example provided for circulating cooling air by a ventilation system, for example provided with at least one ventilator in the system 100, the ventilator for example being provided with a cooling unit at the air intake of the at least one ventilator so that air sucked into the ventilator is first cooled by the cooling unit. Although the ventilating system is not shown in the figures, the ventilation system is provided for providing and circulating cooled air through the cooling chamber 103.

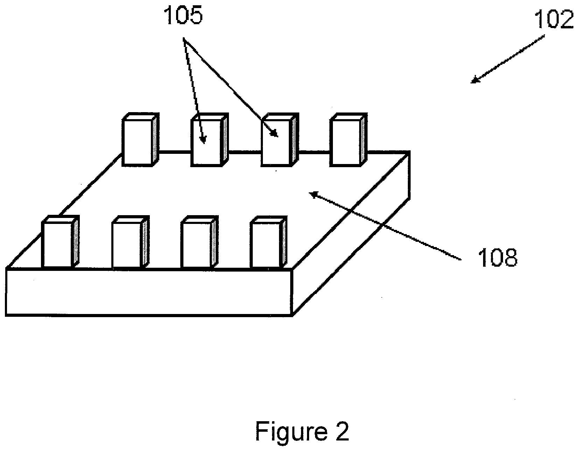

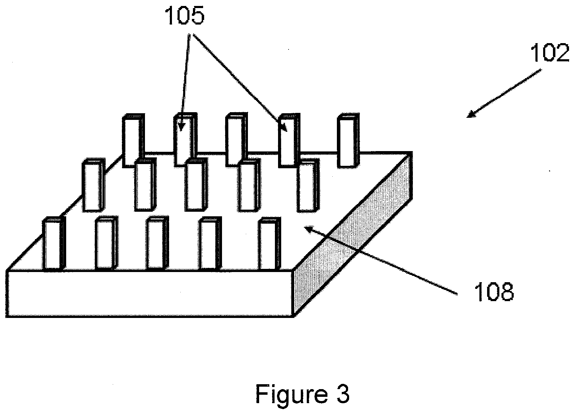

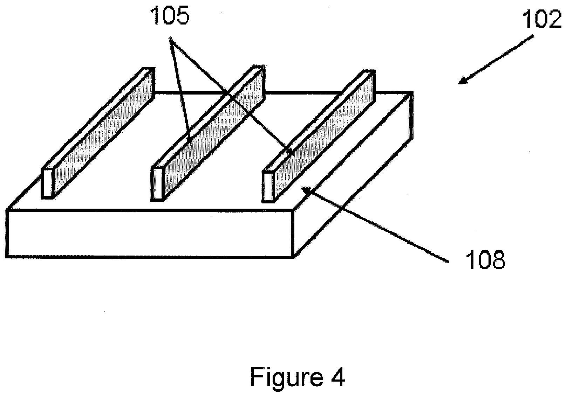

According to an embodiment of the present invention, the air circulation means i are provided on the mould trays 102, as shown in figure 1. The air circulation means 105 may-comprise a number of support members, such as legs or fins, extending outwardly from the bottom side 108 of the mould tray 102 and spaced apart from one another, as shown in figures 2 to 4. The support members 105 may be arranged in a variety of patterns in order to maximise the circulation of cooling air along the bottom side 108 of the mould trays 102. For example, the support members 105 may be arranged only at specific location on the periphery of the bottom side 108 of the mould trays 102, as shown in figure 2. The configuration of the support member 105 shown in figure 2 may have as an advantage that a larger portion of the bottom side 108 of the mould trays 102 remains exposed to the cooling air, which may contribute to the faster and uniform solidification of the chocolate mass 811 in the mould trays. In another example, the support members 105 may be arranged in a matrix-like configuration on the bottom side 108 of the mould trays as shown in figure 3. This configuration of the support members 105 shown in figure 3 may enable for a larger number of support members to be used, which may enable heavier mould trays to be supported on the top load carrying side of the at least first conveyor belt 101. Furthermore, a matrix-like configuration for supporting standard mould trays be allow for the support members to be designed with smaller dimensions since the weight of the mould trays 102 may be spread more evenly across a larger number of support members. Figure 4 presents a further example of the support members 105, wherein each support member extends continuously in a predetermined direction along the bottom side 108 of the mould trays 102. The provision of a space between the support members 105 enables the formation of air passageways, which allow the cooling air to circulate along the bottom side 108 of the mould trays 102 irrespectively of the type of conveyor belt used, thereby ensuring that the liquid chocolate mass 811 solidifies uniformly in the mould trays 102.

According to embodiments of the present invention, the support members 105 may be integrally formed with mould trays 102 in a single piece made of the same material. For example, the mould trays 102 can be made from a polymer-based material such as plastic, which is less expensive and easier to produce than metal. The mould trays can also be made from a metal-alloy such as aluminium, which although usually more expensive than plastic, would enable for the faster cooling and thus faster solidification of the liquid chocolate mass 811 in the mould trays 102 due to their larger thermal conductivity. Alternatively, the support members 105 may also be provided as separate elements arranged to be attached to the bottom side 108 of the mould trays 102 by fixing means such as glue or screws. Furthermore, the support member 105, may be made from a different material than the mould trays, for example the mould trays may be made from aluminium, while the support members may be made from plastic, and visa versa. Although not explicitly mentioned, It should be noted that any other combination of a materials known to the skilled person in art would also be allowable.

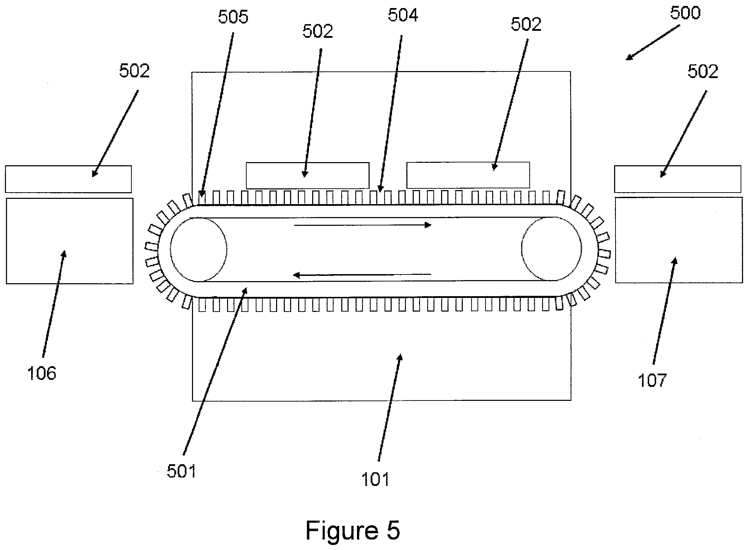

Figure 5 shows a system 500 for producing chocolate-based articles in solidifying form according to embodiments of the present invention. The system 500 is largely the same with the system 100 presented in figure 1, with the exception that the air circulation means 505 in this case are provided on the at least first conveyor belt 501 rather than on the mould trays 102. The air circulation means 505 may comprise, as previously discussed with reference to the system 100 of figure 1, support members, in the form of support legs or fins that are spaced apart from one another so as to form air passageways allowing the cooling air to circulate in the bottom side 108 of the mould trays 502. In the system 500 of figure 2, the support members may be arranged to extend outwardly from the top load carrying side 504 of the at least first conveyor belt 501. The provision of the support members 505 on the conveyor belt may offer a more cost effective and simpler approach to realising the system of the present invention since it allows for the use of existing conveyor belts by replacing the chains or rollers with a suitable continuous and substantially flat belt having support member on the top load carrying side. As previously discussed, the support members may be arranged on the top load carrying side 504 of the at least first conveyor belt 501 in a variety of patterns similar to those shown in figures 2 to 4. Furthermore, the support member may be integrally formed with the belt of the at least first conveyor 501 in a single piece made from the same material. Alternatively, and similar to the previous embodiments, the support members 505 may be separately provided and arranged to be attached to the conveyor belt by fixing means such as glue or screws.

The at least first conveyor belt 101, 501 may comprise overlapping sheets of material arranged in such a way so that a continuous substantially flat surface is provided. The at least first conveyor belt 101, 501 can be made from a durable material which may be polymer or metal-based such as plastic or aluminium. Furthermore, the support members 505 may be made from a material different from that of the conveyor belt 501. For example, the support members 505 may be made form a polymer-based material while the conveyor belt is made of metal-based material.

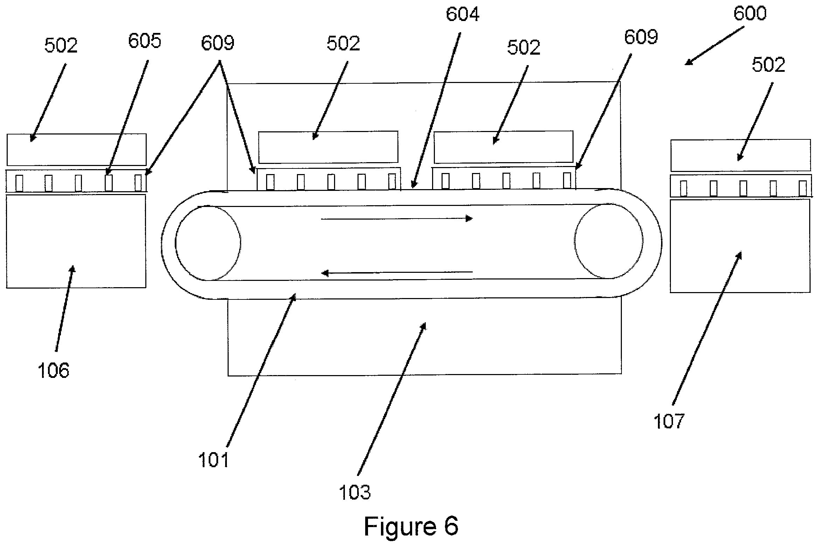

Figure 6 shows a system according to a further embodiment of the present invention. In this case, the air circulation means 605 are provided on a support body 609 which is independent from the mould trays 502 and may further be separate from the at least first conveyor belt 101. The support body 609 may be arranged to cooperate with the bottom side 608 mould trays 502 such that the mould trays can be securely positioned on the support body 609. More specifically, the support body 609 may be arranged to be coupled to the bottom side 608 of the mould trays 502 such that cooling air can circulate along the bottom side 608 of the mould trays 502 when the mould trays 502 are positioned on the top load carrying side 604 of the conveyor belt 501. The use of a separate support body 509 for providing the air circulation means 505, may enhance the stability of the mould trays 502 on the at least first conveyor belt 501 during transportation. Furthermore, the support body 509 may be designed such that it offers a stable support surface for the mould trays 502 during transportation, irrespective of the type of the conveyor belt used, thereby offering a cost effective solution by enabling the use of existing conveyor belts .

According to an embodiment of the present invention the support body 609 may comprise a hollow frame 612 attached to a support surface 610. The hollow frame may be dimensioned such that it securely fits on the bottom side of the mould trays 502 while ensuring that a gap remains between the support surface 610 and the bottom side 608 of the mould trays 502 to allow for the circulation of cooling air along the bottom side 608 of the mould trays.

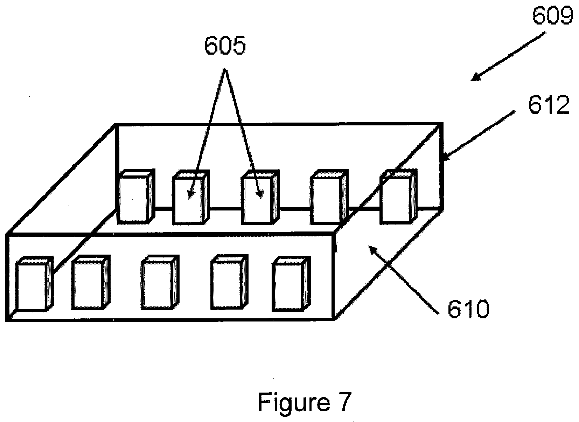

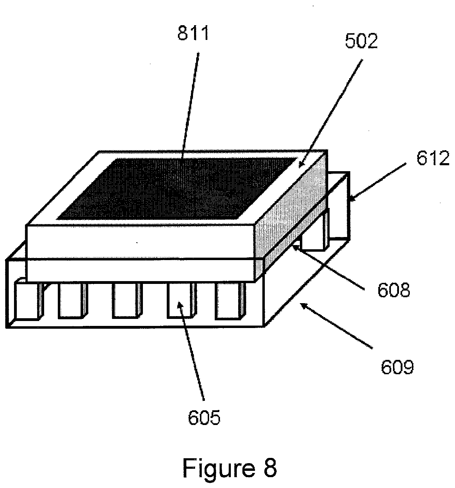

According to a further embodiment of the present invention, the support body 609 may comprise support member 605 extending outwardly from the support surface 610, as shown in figure 7. The height of the support members 605 may be smaller than the overall height of the support body, such that when a mould tray is positioned on top of the support member the frame 612 may be arranged to prevent the mould tray 502 from being displaced during transportation, as shown in figure 8. In other embodiments the support body 609 may be dimensioned such that more than one mould tray 502 can be supported. The support members 605 may integrally formed with the support body 609 as a single piece made from the same material. For example the support body 609 can be made from polymer or metal based materials such as plastic or aluminium.

According to an embodiment of the present invention the support members 605 arranged on the support body 609 can be provided separately from the support body 609. For example, the support members may be glued or screwed into the desired positions on the support surface 610 of the support body 609. Furthermore, the support members 605 can be made from a different material to that of the support body 609. For example, the support member 605 can be made from a vibration absorbent material arranged to provide dampening of the vibrations caused during transportation in addition to effectively supporting the mould trays 502 on the top load carrying side 504 of the at least first conveyor belt 501. For example, the support member 605 can be made from a polymer-based elastomeric material having elastic properties such as rubber.

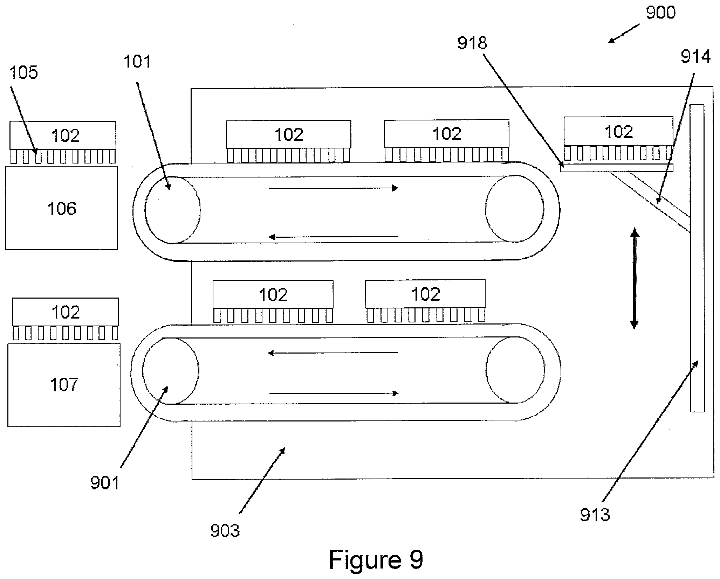

According to embodiments of the present invention, the system 900 for producing chocolate-based articles in solidifying form may further comprise at least a second conveyor belt 901, as shown in figure 9. For simplicity, the system 900 will be explained herein with references to the system 100 shown in figure 1. However, it should be noted that the system 900 may be equally combined with any of the embodiments of the present invention, examples of which are shown in figures 1 to 8. According to one embodiment of the present invention, the at least second conveyor belt 901 of the system 900 may be positioned below the at least first conveyor belt 101. Depending on the configuration of the system 900, the at least second conveyor belt 901 may be alternatively positioned above the at least first conveyor belt 101. The at least second conveyor belt 901 may be arranged for carrying the mould trays 102 through the cooling chamber 903 along a second cooling path. The transport direction in which the mould trays 102 are carried along the second cooling path may be opposite that of the first cooling path. By arranging the at least second conveyor belt 901 to carry the mould trays 102 in the opposite direction of that of the at least first conveyor belt 101 allows for the total dimensions of the system 900 to be significantly recued. This is because the total transport distance that the mould trays 102 need to travel in the cooling chamber 903 can be split between the at least first and at least second conveyor belts 101, 901, which are positioned opposite one another. By significantly reducing the dimensions of the system, it may be possible to dimension the system 900 such that it fits in an intermodal container, such that it can be transported in a pre-assembled state in another part of the world and immediately deployed for production without the need for special engineering support.

According to embodiments of the present invention, the mould trays 102 may be transported between the different levels defined by the position of the at least first and at least second conveyor belts 101, 901 by means of a lift system 911. The lift system 911 may be positioned inside the cooling chamber 903 and may comprise a platform 918 for supporting the mould trays 102 and an arm lever 914 arranged for moving the platform between the different levels at predetermined time intervals. The lift system 911 may be for example a vertical reciprocal conveyor belt or other types of lift systems known in the art. Furthermore, the system 900 may allow for the loading section 106 and the collecting section to be positioned at the same side of the system 900. This may configuration may contribute in reducing operating cost of the system 900 since only a single operator, human or robot, can be sufficient to operate both the loading and collecting of the mould trays 102.

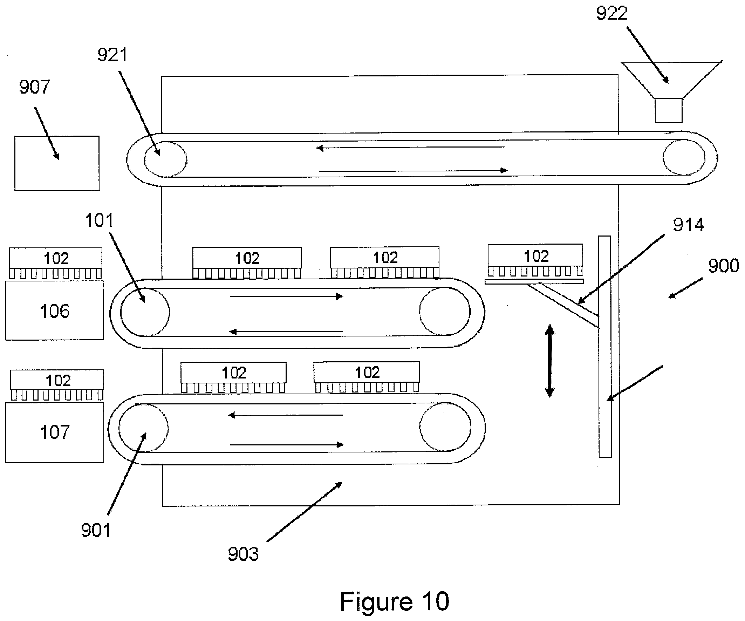

According to an embodiment of the present invention, the system 900 may further comprise at least a third conveyor belt 921, as shown in Figure 10. The at least third conveyor belt may be used for making chocolate-based articles that do not require mould trays, such as individual chocolate pieces deposited directly on the third conveyor belt 921. The system 900 may comprise a chocolate dispensing machine 922 for dispensing chocolate in liquid form directly on the at least third conveyor belt 921. The liquid chocolate may be deposited in the form of continuous strips or droplets. The liquid chocolate may be transported through the cooling chamber where it solidifies before being collected at a collecting section 907. By positioning at least a third conveyor belt 921 in combination with the at least first 101 and at least second conveyor belts 901, different types of chocolate-based articles can be made at the same time or independently from each other on different moments.

According to an embodiment of the present invention a method is providing for producing the chocolate-based articles using the system according to embodiments of the present invention. The method comprises the step of loading mould trays 102, 502 at a loading section 106 filled with chocolate mass 811 in liquid form onto a top load 104, 504, 604 carrying side of at least a first conveyor belt 101, 501 at an entry point of a transportation system. Once loaded, the mould trays 102, 502 are then transported by means of the at least first conveyor belt 101, 501 through a cooling chamber 103, 903 along a first cooling path, the cooling chamber 103, 903 being arranged for circulating cooling air for solidifying the chocolate mass 811 under predetermined conditions. After the chocolate-based articles are solidified the mould trays 102, 502 are collected at a collecting section 107, which is positioned an exit point of the transportation system. The method further comprises the step of providing prior or together with the loading step air circulation means 105, 505, 605 arranged between the top load carrying side 104, 504, 604 of the at least first conveyor belt 101, 501 and a bottom side 108 of the mould trays such that cooling air can circulate along the bottom side 108 of the mould trays 102, 502.

## Claims

1. A system for producing chocolate-based articles (100, 500, 600, 900) in solidifying form, the system comprising:
a transportation system comprising at least a first conveyor belt (101, 501);
a loading section (106) provided for loading mould trays (102, 502) filled with chocolate mass in liquid form (811) onto a top load carrying side (104, 504, 604) of the at least first conveyor belt (101, 501) at an entry point of the transportation system; and
a cooling chamber (103, 903) arranged for circulating cooling air for solidifying the chocolate mass under predetermined conditions before the mould trays (102, 502) are collected at a collecting section (107) positioned at an exit point of the transportation system;
wherein the at least first conveyor belt (101, 501) is arranged for transporting the mould trays (102, 502) through the cooling chamber (103, 903) along a first cooling path;
wherein the system (100, 500, 600, 900) further comprises air circulation means (105, 505, 605) arranged between the top load carrying side (104, 504, 604) of the at least first conveyor belt (101, 501) and a bottom side (108) of the mould trays such that cooling air can circulate along the bottom side (108) of the mould trays (102, 502)
**characterized in that** the air circulation means comprises support members (105, 505, 605) spaced apart from one another.

2. The system (100, 500, 600, 900) according to claim 1, wherein the at least first conveyor belt (101, 501) is a continuous flat conveyor belt.

3. The system (100, 500, 600, 900) according to claim 1 or claim 2, wherein the at least first conveyor belt (101, 501) comprises overlapping sheets of material arranged in such a way so as to provide a continuous flat surface.

4. The system (100, 500, 600, 900) according to any of the preceding claims, wherein the at least first conveyor belt (101, 501) is made of a durable material.

5. The system (100, 500, 600, 900) according to claim 4, wherein the at least first conveyor belt (101, 501) is made of a polymer-based material.

6. The system (100, 500, 600, 900) according to claim 5, wherein the at least first conveyor belt (101, 501) is made of plastic.

7. The system (100, 500, 600, 900) according to any one of claims 1 to 4, wherein the at least first conveyor belt (101, 501) is made of a metal alloy.

8. The system (100) according to any of the preceding claims, wherein the support members (105) are part of the mould trays (102) and extend outwardly from the bottom side (108) of the mould trays (102).

9. The system (100) according to claim 8, wherein the support members (105) are arranged on the periphery of the bottom side (108) of the mould trays (102).

10. The system (100) according any of the preceding claims, wherein the support members (105) are formed integrally with the mould trays (102).

11. The system (500) according to any of the preceding claims, wherein the support members (505) are part of the conveyor belt (501) and extend outwardly from the top load carrying side (504) of the conveyor belt (501).

12. The system (500) according to claim 11, wherein the support members (505) are formed integrally with the belt of the conveyor.

13. The system (600) according to any of the preceding claims, wherein the support members (605) are arranged on a support body (609) which is separate from the mould trays (502) and the conveyor belt (501).

14. The system (600) of claim 13, wherein the support body (609)-is arranged to be coupled to the bottom side (608) of the mould trays (502) in between the mould trays (502) and the conveyor belt (501) such that-cooling air can circulate along the bottom side (608) of the mould trays-(502) when the mould trays (502) are positioned on the top load carrying side (604) of the conveyor belt (501) with the support body (609) in between the mould tray (502) and the conveyor belt (501).

15. The system (600) of claim 14, wherein the support body (609) is made of the same material as the mould trays (502).

16. The system (100, 500, 600, 900) of any of the preceding claims, wherein the mould trays (102, 502) are made of a polymer-based material.

17. The system (100, 500, 600, 900) of claim 16, wherein the mould trays (102, 502) are made of plastic.

18. The system (100, 500, 600, 900) according to any one of the claims 1 to 15, wherein the mould trays (102, 502) are made of a metal alloy.

19. The system (900) according to any of the preceding claims, wherein the transportation system further comprises at least a second conveyor belt (901).

20. The system (900) of claim 19, wherein the second conveyor belt (901) is positioned below the at least first conveyor belt (101, 501).

21. The system (900) of claim 20, wherein the at least second conveyor belt (901) is arranged for carrying the mould trays (102, 502) through the cooling chamber (903) along a second cooling path.

22. The system (900) of claim 21, wherein the transport direction in which the mould trays (102, 502) are carried along the second cooling-path is opposite to that of the first cooling path.

23. The system according to any one of claims 19 to 22, wherein a lift system (911) is provided for transferring the mould trays (102, 502) from the at least first conveyor belt (101, 501) to the at least second conveyor belt (901).

24. The system (900) according to any of the preceding claims, wherein the loading section (106) and collecting section (107) of the system are located on the same side.

25. The system (100, 500, 600, 900) according to any of the preceding claims, wherein the system is dimensioned such that it fits in an intermodal container.

26. A method for producing chocolate-based articles in solidifying form using the system (100, 500, 600, 900) according to any one of the claims 1 to 25, the method comprising the steps of:
loading mould trays (102, 502) at a loading section (106) filled with chocolate mass (811) in liquid form onto a top load (104, 504, 604) carrying side of at least a first conveyor belt (101, 501) at an entry point of a transportation system;
transporting the mould trays (102, 502) by means of the at least first conveyor belt (101, 501) through a cooling chamber (103, 903) along a first cooling path, the cooling chamber (103, 903) being arranged for circulating cooling air for solidifying the chocolate mass (811) under predetermined conditions;
collecting the mould trays (102, 502) at a collecting section (107) positioned at an exit point of the transportation system;
wherein the method further comprises the step of
providing air circulation means (105, 505, 605) arranged between the top load carrying side (104, 504, 604) of the at least first conveyor belt (101, 501) and a bottom side (108) of the mould trays such that cooling air can circulate along the bottom side (108) of the mould trays (102, 502)
**characterized in that** the air circulation means comprises support members (105, 505, 605) spaced apart from one another.

## Patentansprüche

1. System (100, 500, 600, 900) zur Herstellung von Artikeln auf Schokoladenbasis in sich verfestigender Form, wobei das System umfasst:
ein Transportsystem, das mindestens ein erstes Förderband (101, 501) umfasst;
einen Ladeabschnitt (106), der zum Aufladen von Formschalen (102, 502), die mit Schokoladenmasse (811) in flüssiger Form gefüllt sind, auf eine Obertrum-Trägerseite (104, 504, 604) mindestens des ersten Förderbands (101, 501) an einem Eintrittspunkt des Transportsystems vorgesehen ist; und
eine Kühlkammer (103, 903), die dazu ausgebildet ist, dass sie Kühlluft zum Verfestigen der Schokoladenmasse unter vorgegebenen Bedingungen zirkulieren lässt, bevor die Formschalen (102, 502) an einem Abnahmeabschnitt (107), der an einem Austrittspunkt des Transportsystems positioniert ist, abgenommen werden;
wobei das mindestens eine Förderband (101, 501) dazu ausgebildet ist, dass es die Formschalen (102, 502) entlang einer ersten Kühlstrecke durch die Kühlkammer (103, 903) transportiert;
wobei das System (100, 500, 600, 900) weiter Luftzirkulationsmittel (105, 505, 605) umfasst, die zwischen der Obertrum-Trägerseite (104, 504, 604) mindestens des ersten Förderbands (101, 501) und einer Unterseite (108) der Formschalen derart angeordnet sind, dass Kühlluft entlang der Unterseite (108) der Formschalen (102, 502) zirkulieren kann,
**dadurch gekennzeichnet, dass** die Luftzirkulationsmittel voneinander beabstandete Stützglieder (105, 505, 605) umfassen.

2. System (100, 500, 600, 900) nach Anspruch 1, wobei mindestens das erste Förderband (101, 501) als flaches Endlosband ausgebildet ist.

3. System (100, 500, 600, 900) nach Anspruch 1 oder Anspruch 2, wobei mindestens das erste Förderband (101, 501) überlappende Materialbahnen aufweist, die derart angeordnet sind, dass sie eine kontinuierliche flache Oberfläche bereitstellen.

4. System (100, 500, 600, 900) nach einem der vorhergehenden Ansprüche, wobei mindestens das erste Förderband (101, 501) aus einem haltbaren Material hergestellt ist.

5. System (100, 500, 600, 900) nach Anspruch 4, wobei mindestens das erste Förderband (101, 501) aus einem Material auf Polymerbasis hergestellt ist.

6. System (100, 500, 600, 900) nach Anspruch 5, wobei mindestens das erste Förderband (101, 501) aus Kunststoff hergestellt ist.

7. System (100, 500, 600, 900) nach einem der Ansprüche 1 bis 4, wobei mindestens das erste Förderband (101, 501) aus einer Metalllegierung hergestellt ist.

8. System (100) nach einem der vorhergehenden Ansprüche, wobei die Stützglieder (105) als Teil der Formschalen (102, 502) gebildet sind und sich von der Unterseite (108) der Formschalen (102) nach außen erstrecken.

9. System (100) nach Anspruch 8, wobei die Stützglieder (105) im Randbereich der Unterseite (108) der Formschalen (102) angeordnet sind.

10. System (100) nach einem der vorhergehenden Ansprüche, wobei die Stützglieder (105) einteilig mit den Formschalen (102) ausgebildet sind.

11. System (500) nach einem der vorhergehenden Ansprüche, wobei die Stützglieder (505) als Teil des Förderbands (501) gebildet sind und sich von der Obertrum-Trägerseite (504) des Förderbands (501) nach außen erstrecken.

12. System (500) nach Anspruch 11, wobei die Stützglieder (505) einteilig mit dem Band der Fördereinrichtung ausgebildet sind.

13. System (600) nach einem der vorhergehenden Ansprüche, wobei die Stützglieder (605) auf einem Stützkörper (609) angeordnet sind, der von den Formschalen (502) und dem Förderband (501) getrennt ist.

14. System (600) nach Anspruch 13, wobei der Stützkörper (609) so angeordnet ist, dass er mit der Unterseite (608) der Formschalen (502) zwischen den Formschalen (502) und dem Förderband (501) derart koppelbar ist, dass Kühlluft entlang der Unterseite (608) der Formschalen (502) zirkulieren kann, wenn die Formschalen (502) auf der Obertrum-Trägerseite (604) des Förderbands (501) mit der Formschale (502) positioniert sind, wobei der Stützkörper (609) zwischen der Formschale (502) und dem Förderband (501) angeordnet ist.

15. System (600) nach Anspruch 14, wobei der Stützkörper (609) aus dem gleichen Material hergestellt ist wie die Formschalen (502).

16. System (100, 500, 600, 900) nach einem der vorhergehenden Ansprüche, wobei die Formschalen (102, 502) aus einem Material auf Polymerbasis hergestellt sind.

17. System (100, 500, 600, 900) nach Anspruch 16, wobei die Formschalen (102, 502) aus Kunststoff hergestellt sind.

18. System (100, 500, 600, 900) nach einem der Ansprüche 1 bis 15, wobei die Formschalen (102, 502) aus einer Metalllegierung hergestellt sind.

19. System (900) nach einem der vorhergehenden Ansprüche, wobei das Transportsystem weiter mindestens ein zweites Förderband (901) umfasst.

20. System (900) nach Anspruch 19, wobei das zweite Förderband (901) unter mindestens dem ersten Förderband (101, 501) positioniert ist.

21. System (900) nach Anspruch 20, wobei mindestens das zweite Förderband (901) dazu ausgebildet ist, dass es die Formschalen (102, 502) entlang einer zweiten Kühlstrecke durch die Kühlkammer (903) trägt.

22. System (900) nach Anspruch 21, wobei die Transportrichtung, in der die Formschalen (102, 502) entlang der zweiten Kühlstrecke getragen werden, der Richtung der ersten Kühlstrecke entgegengesetzt ist.

23. System nach einem der Ansprüche 19 bis 22, wobei ein Liftsystem (911) zum Überführen der Formschalen (102, 502) vom mindestens ersten Förderband (101, 501) zum mindestens zweiten Förderband (901) vorgesehen ist.

24. System (900) nach einem der vorhergehenden Ansprüche, wobei der Ladeabschnitt (106) und der Abnahmeabschnitt (107) des Systems sich auf derselben Seite befinden.

25. System (100, 500, 600, 900) nach einem der vorhergehenden Ansprüche, wobei das System so bemessen ist, dass es in einen Intermodal-Container passt.

26. Verfahren zur Herstellung von Artikeln auf Schokoladenbasis in sich verfestigender Form unter Verwendung des Systems (100, 500, 600, 900) nach einem der Ansprüche 1 bis 25, wobei das Verfahren die Schritte umfasst:
Aufladen von Formschalen (102, 502), die mit Schokoladenmasse (811) in flüssiger Form gefüllt sind, an einem Ladeabschnitt (106) auf eine Obertrum-Trägerseite (104, 504, 604) mindestens eines ersten Förderbands (101, 501) an einem Eintrittspunkt eines Transportsystems;
Transportieren der Formschalen (102, 502) mit Hilfe mindestens des ersten Förderbands (101, 501) durch eine Kühlkammer (103, 903) entlang einer ersten Kühlstrecke, wobei die Kühlkammer (103, 903) dazu ausgebildet ist, dass sie Kühlluft zum Verfestigen der Schokoladenmasse (811) unter vorgegebenen Bedingungen zirkulieren lässt;
Abnehmen der Formschalen (102, 502) an einem Abnahmeabschnitt (107), der an einem Austrittspunkt (104) des Transportsystems positioniert ist;
wobei das Verfahren weiter den Schritt umfasst zum
Bereitstellen von Luftzirkulationsmitteln (105, 505, 605), die zwischen der Obertrum-Trägerseite (104, 504, 604) mindestens des ersten Förderbands (101, 501) und einer Unterseite (108) der Formschalen derart angeordnet sind, dass Kühlluft entlang der Unterseite (108) der Formschalen (102, 502) zirkulieren kann,
**dadurch gekennzeichnet, dass** die Luftzirkulationsmittel voneinander beabstandete Stützglieder (105, 505, 605) umfassen.

## Revendications

1. Système pour produire des articles à base de chocolat (100, 500, 600, 900) sous forme solidifiée, le système comprenant :
un système de transport comprenant au moins une première courroie de convoyeur (101, 501) ;
une section de chargement (106) prévue pour charger des plateaux de moulage (102, 502) remplis avec une masse de chocolat sous forme liquide (811) sur un côté supérieur porteur de charge (104, 504, 604) de ladite au moins une première courroie de convoyeur (101, 501) au niveau d'un point d'entrée du système de transport ; et
une chambre de refroidissement (103, 903) agencée pour mettre en circulation de l'air de refroidissement pour solidifier la masse de chocolat dans des conditions prédéterminées avant que les plateaux de moulage (102, 502) soient collectés au niveau d'une section de collecte (107) positionnée au niveau d'un point de sortie du système de transport ;
ladite au moins une première courroie de convoyeur (101, 501) étant agencée pour transporter les plateaux de moulage (102, 502) au travers de la chambre de refroidissement (103, 903) le long d'un premier chemin de refroidissement ;
le système (100, 500, 600, 900) comprenant en outre un moyen de circulation d'air (105, 505, 605) agencé entre le côté supérieur porteur de charge (104, 504, 604) de ladite au moins une première courroie de convoyeur (101, 501) et un côté inférieur (108) des plateaux de moulage de telle sorte que de l'air de refroidissement puisse circuler le long du côté inférieur (108) des plateaux de moulage (102, 502),
**caractérisé en ce que** le moyen de circulation d'air comprend des éléments supports (105, 505, 605) espacés les uns des autres.

2. Système (100, 500, 600, 900) selon la revendication 1, dans lequel ladite au moins une première courroie de convoyeur (101, 501) est une courroie de convoyeur plate continue.

3. Système (100, 500, 600, 900) selon la revendication 1 ou la revendication 2, dans lequel ladite au moins une première courroie de convoyeur (101, 501) comprend des feuilles de matériau en chevauchement agencées de manière à fournir une surface plate continue.

4. Système (100, 500, 600, 900) selon l'une quelconque des revendications précédentes, dans lequel ladite au moins une première courroie de convoyeur (101, 501) est fabriquée en un matériau durable.

5. Système (100, 500, 600, 900) selon la revendication 4, dans lequel ladite au moins une première courroie de convoyeur (101, 501) est fabriquée en un matériau à base de polymère.

6. Système (100, 500, 600, 900) selon la revendication 5, dans lequel ladite au moins une première courroie de convoyeur (101, 501) est fabriquée en plastique.

7. Système (100, 500, 600, 900) selon l'une quelconque des revendications 1 à 4, dans lequel ladite au moins une première courroie de convoyeur (101, 501) est fabriquée en un alliage métallique.

8. Système (100) selon l'une quelconque des revendications précédentes, dans lequel les éléments supports (105) font partie des plateaux de moulage (102) et s'étendent vers l'extérieur à partir du côté inférieur (108) des plateaux de moulage (102).

9. Système (100) selon la revendication 8, dans lequel les éléments supports (105) sont agencés sur la périphérie du côté inférieur (108) des plateaux de moulage (102).

10. Système (100) selon l'une quelconque des revendications précédentes, dans lequel les éléments supports (105) sont formés d'un seul tenant avec les plateaux de moulage (102).

11. Système (500) selon l'une quelconque des revendications précédentes, dans lequel les éléments supports (505) font partie de la courroie de convoyeur (501) et s'étendent vers l'extérieur à partir du côté supérieur porteur de charge (504) de la courroie de convoyeur (501).

12. Système (500) selon la revendication 11, dans lequel les éléments supports (505) sont formés d'un seul tenant avec la courroie du convoyeur.

13. Système (600) selon l'une quelconque des revendications précédentes, dans lequel les éléments supports (605) sont agencés sur un corps support (609) qui est séparé des plateaux de moulage (502) et de la courroie de convoyeur (501).

14. Système (600) de la revendication 13, dans lequel le corps support (609) est agencé pour être accouplé au côté inférieur (608) des plateaux de moulage (502) entre les plateaux de moulage (502) et la courroie de convoyeur (501) de telle sorte que de l'air de refroidissement puisse circuler le long du côté inférieur (608) des plateaux de moulage (502) lorsque les plateaux de moulage (502) sont positionnés sur le côté supérieur porteur de charge (604) de la courroie de convoyeur (501) avec le corps support (609) entre le plateau de moulage (502) et la courroie de convoyeur (501).

15. Système (600) de la revendication 14, dans lequel le corps support (609) est fabriqué en le même matériau que les plateaux de moulage (502).

16. Système (100, 500, 600, 900) de l'une quelconque des revendications précédentes, dans lequel les plateaux de moulage (102, 502) sont fabriqués en un matériau à base de polymère.

17. Système (100, 500, 600, 900) de la revendication 16, dans lequel les plateaux de moulage (102, 502) sont fabriqués en plastique.

18. Système (100, 500, 600, 900) selon l'une quelconque des revendications 1 à 15, dans lequel les plateaux de moulage (102, 502) sont fabriqués en un alliage métallique.

19. Système (900) selon l'une quelconque des revendications précédentes, dans lequel le système de transport comprend en outre au moins une deuxième courroie de convoyeur (901).

20. Système (900) de la revendication 19, dans lequel la deuxième courroie de convoyeur (901) est positionnée en dessous de ladite au moins une première courroie de convoyeur (101, 501).

21. Système (900) de la revendication 20, dans lequel ladite au moins une deuxième courroie de convoyeur (901) est agencée pour porter les plateaux de moulage (102, 502) au travers de la chambre de refroidissement (903) le long d'un deuxième chemin de refroidissement.

22. Système (900) de la revendication 21, dans lequel la direction de transport dans laquelle les plateaux de moulage (102, 502) sont portés le long du deuxième chemin de refroidissement est opposée à celle du premier chemin de refroidissement.

23. Système selon l'une quelconque des revendications 19 à 22, dans lequel un système de soulèvement (911) est prévu pour transférer les plateaux de moulage (102, 502) depuis ladite au moins une première courroie de convoyeur (101, 501) vers ladite au moins une deuxième courroie de convoyeur (901).

24. Système (900) selon l'une quelconque des revendications précédentes, dans lequel la section de chargement (106) et la section de collecte (107) du système sont situées sur le même côté.

25. Système (100, 500, 600, 900) selon l'une quelconque des revendications précédentes, dans lequel le système est dimensionné de telle sorte qu'il loge dans un contenant intermodal.

26. Procédé de production d'articles à base de chocolat sous forme solidifiée utilisant le système (100, 500, 600, 900) selon l'une quelconque des revendications 1 à 25, le procédé comprenant les étapes suivantes :
le chargement de plateaux de moulage (102, 502) au niveau d'une section de chargement (106) remplis avec une masse de chocolat (811) sous forme liquide sur un côté supérieur porteur de charge (104, 504, 604) d'au moins une première courroie de convoyeur (101, 501) au niveau d'un point d'entrée d'un système de transport ;
le transport des plateaux de moulage (102, 502) au moyen de ladite au moins une première courroie de convoyeur (101, 501) au travers d'une chambre de refroidissement (103, 903) le long d'un premier chemin de refroidissement, la chambre de refroidissement (103, 903) étant agencée pour mettre en circulation de l'air de refroidissement pour solidifier la masse de chocolat (811) dans des conditions prédéterminées ;
la collecte des plateaux de moulage (102, 502) au niveau d'une section de collecte (107) positionnée au niveau d'un point de sortie du système de transport ;
le procédé comprenant en outre l'étape suivante :
la fourniture d'un moyen de circulation d'air (105, 505, 605) agencé entre le côté supérieur porteur de charge (104, 504, 604) de ladite au moins une première courroie de convoyeur (101, 501) et un côté inférieur (108) des plateaux de moulage de telle sorte que de l'air de refroidissement puisse circuler le long du côté inférieur (108) des plateaux de moulage (102, 502),
**caractérisé en ce que** le moyen de circulation d'air comprend des éléments supports (105, 505, 605) espacés les uns des autres.
